# EUROPÄISCHE PATENTSCHRIFT

(11) **EP 0 810 344 B1**
(45) Veröffentlichungstag und Bekanntmachung des Hinweises auf die Patenterteilung: **17.07.2002**
(21) Anmeldenummer: 97114181.7
(22) Anmeldetag: 14.01.1994
(51) Int. Cl.: E06B 3/968

(54) **Eckverbinder und Zugeordnete auf Gehrung geschnittene Hohlprofile eines Rahmens für Fenster, Türen oder Fassaden**
Corner key and associated mitred hollow section members for door, window or facade frames
Equerre et profilés creux associés, coupés en onglet pour encadrement de fenêtres, portes ou façades

(30) Priorität: 10.02.1993 DE 4303877
(43) Veröffentlichungstag der Anmeldung: 03.12.1997
(62) Teilanmeldung aus: 94100488.9
(73) Patentinhaber: SCHÜCO International KG, 33609 Bielefeld (DE)
(72) Erfinder: Habicht, Siegfried, 33818 Leopoldshöhe (DE); Girnus, Manfred, 33818 Leopoldshöhe (DE)
(74) Vertreter: Stracke, Alexander, Dipl.-Ing.

(56) Entgegenhaltungen:
- CH-A- 542 370
- DE-A- 2 307 595
- DE-A- 2 500 937
- DE-A- 3 015 140
- DE-A- 3 022 192
- DE-A- 3 102 921
- DE-U- 8 621 143
- US-A- 3 528 692
- US-A- 3 797 194
- US-A- 3 994 109

## Beschreibung

Die Erfindung bezieht sich auf einen Eckverbinder und zugeordnete, auf Gehrung geschnittene Hohlprofile eines Rahmens für Fenster, Türen oder Fassaden entsprechend dem Oberbegriff des Anspruchs 1.

Ein derartiger Eckverbinder ist aus der Druckschrift DE 86 21 143 U bekannt.

Es ist zwar eine Eckverbindung der genannten Art bekannt (DE-A-30 22 192), bei der das Einspritzen von Kleber in die vorgefertigte Rahmenecke möglich ist, jedoch sind die konkreten Maßnahmen nicht geeignet, die an eine Rahmenecke gestellten Anforderungen hinsichtlich Festigkeit, Fließverhalten des Niedrigviskose-Klebers und die erforderliche Kleberverteilung wie auch optimale Verarbeitungsbedingungen sicherzustellen.

Der nach der genannten Literaturstelle bekannte Eckverbinder weist in der inneren Ecke eine den Verteilungskanal für die Klebemasse bildende Ausnehmung auf. Diese Ausnehmung befindet sich im Bereich der größten auftretenden Spannungen einer Eckverbindung.

Um die Festigkeit sicherzustellen und Kerbwirkungen zu vermeiden, muß diese Ausnehmung so klein wie möglich gehalten werden und im Übergangsbereich zu den Innenflächen des Eckverbinders stark abgerundet sein, so daß ein günstiger Spannungsverlauf erzielt wird.

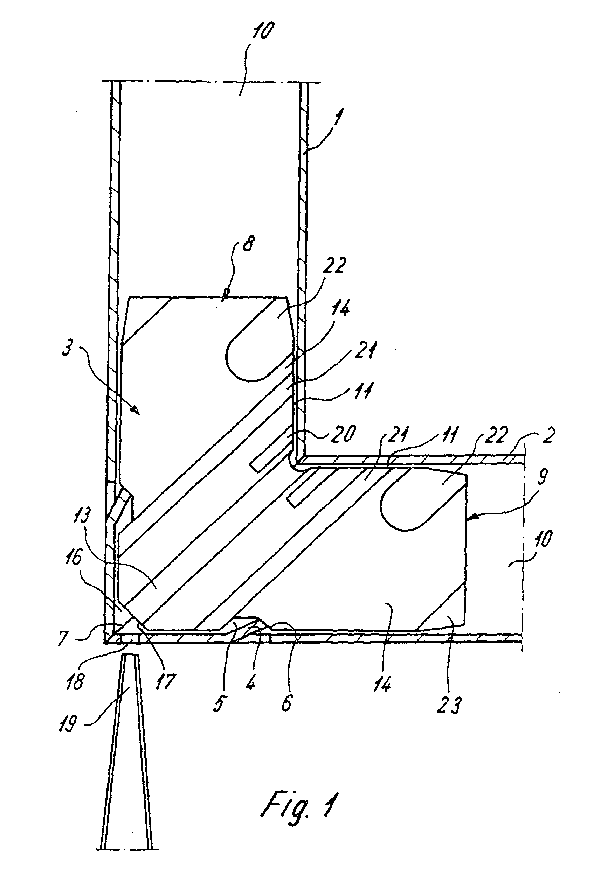

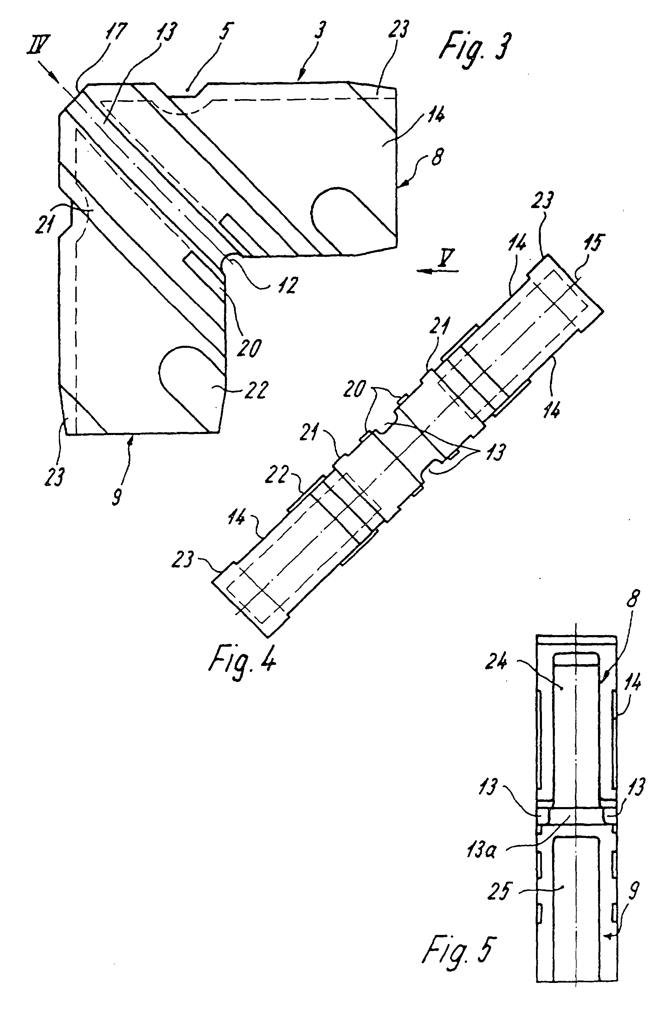

Gemäß den Figuren 1 und 3 der Literaturstelle ist die Ausnehmung lediglich so gewählt, daß die Gratbildung der Innenwandungen der auf Gehrung geschnittenen Rahmenprofile in dieser Ausnehmung Platz findet. Eine gewisse Gratbildung ist in diesem Bereich nicht zu vermeiden. Somit wird die aus Festigkeitsgründen klein zu wählende Ausnehmung weitgehendst durch die in dieser Ausnehmung hineinragende Gehrungswandung wieder verschlossen. Der Niedrigviskose-Zweikomponentenkleber erfordert andererseits relativ große Anfangsströmungsquerschnitte, um überhaupt unter dem begrenzt möglichen Anpreßdruck des Klebers in der entsprechenden Ausnehmung transportiert zu werden. Die Ausnehmung ist somit schon aus den genannten Gründen als Verteilungskanal für die Klebermasse nicht geeignet.

Zum Ansetzen einer Klebereinspritzdüse ist eine Bohrung vorgesehen, die in der Gehrungsebene liegt. Nachteilig ist, daß diese Bohrung erst nach dem mechanischen Zusammenfügen und Fixieren der Eckverbindung gebohrt werden kann.

Der Erfindung liegt die Aufgabe zugrunde, einen Eckverbinder und zugeordnete, auf Gehrung geschnittene Hohlprofile der eingangs genannten Art für den Einsatz von einspritzbaren Klebemassen so zu gestalten, daß die Klebemasse beim Einspritzen an einer Stelle der Eckverbindung in geeigneter Weise an die entsprechenden, für die Festigkeit wesentlichen Flächen geleitet wird.

Diese Aufgabe wird erfindungsgemäß durch die Merkmale des kennzeichnenden Teils des Patentanspruches 1 in Verbindung mit den Merkmalen des Oberbegriffs gelöst.

Im Vergleich mit den bekannten Spachtelverfahren wird bei der erfindungsgemäßen Eckverbindung mit einem Drittel bzw. mit einer halben Menge an Kleber eine ausreichende Festigkeit in der Verklebung zwischen den Rahmenprofilen und dem Eckverbinder erzielt.

Neben der Verringerung der Klebemenge für das Erreichen eines guten Verk bungsergebnisses spielt bei der erfindungsgemäßen Eckverbindung auch die Sauberkeit während des Verklebens der Rahmenprofile mit dem Eckverbinder eine wichtige Rolle, da Nacharbeiten zum Entfernen von nach außen gedrungener Klebemasse entfallen.

Weitere Merkmale der Erfindung ergeben sich aus den Unteransprüchen.

Es zeigen:
- Fig. 1 und 2: in den mechanischen Befestigungsmitteln abweichende Eckverbindungen auf Gehrung geschnittener Hohlprofile, teilweise im Schnitt,
- Fig. 2a: eine Ansicht in Richtung des Pfeiles IIa in Fig. 2,
- Fig. 3: den in der Fig. 1 aufgezeigten Eckverbinder im Grundriß,
- Fig. 4: eine Ansicht in Richtung des Pfeiles IV in Fig. 3,
- Fig. 5: eine Ansicht in Richtung des Pfeiles V in Fig. 3,
- Fig. 6: einen aus zwei winkelförmigen Teilen bestehenden Eckverbinder im Grundriß,
- Fig. 7: eine Ansicht in Richtung des Pfeiles VII in Fig. 6 mit einem geschnittenen Teilbereich,
- Fig. 8: einen Schnitt nach Linie VIII-VIII in Fig. 6,
- Fig. 9: einen Schnitt nach der Linie VIII-IX in Fig. 6,
- Fig. 10: einen aus einem stranggepreßten Profil geschnittenen Eckverbinder mit dem zugeordneten stranggepreßten Profil in perspektivischer Darstellung,
- Fig. 11: den Eckverbinder nach der Fig. 10 mit einer Abdeckung der Öffnungen an den Flankenseiten im Grundriß,
- Fig. 12: eine Ansicht in Richtung des Pfeiles XII in Fig. 11,
- Fig. 13: den Abdeckungskörper für die Flankenseiten des Eckverbinders nach der Fig. 10 im Grundriß,
- Fig. 14: eine Ansicht in Richtung des Pfeiles XIV in Fig. 13,
- Fig. 15: eine Ansicht in Richtung des Pfeiles XV in der Fig. 14,
- Fig. 16: ein mit Abstandsstücken zur Bildung von Spalträumen versehenes Rahmenprofil in perspektivischer Darstellung.

Die Rahmenecke nach der Fig. 1 wird durch die auf Gehrung geschnittenen Profile 1 und sowie durch einen Eckverbinder 3 gebildet, mit dem die Profile 1 und 2 durch ausgestanzte Laschen 4 verspannt werden. Diese Laschen stützen sich beim Einformen in Ausnehmungen 5 des Eckverbinders an Schrägflächen 6 ab und pressen die Profile 1 und 2 in der Gehrungsfuge 7 zusammen. Ferner werden die Schenkel 8 und 9 des Eckverbinders, die in Innenkammern 10 der Hohlprofile eingreifen, mit ihren Innenflächen 11 an die Innenfläche der Rahmenecke gedrückt.

Nach der mechanischen Verspannung der Profile 1 und 2 mit dem Eckverbinder 3 ist somit eine kraftschlüssige Verbindung zwischen den Profilen 1 und 2 in der Gehrungsfuge 7 und zwischen den Innenseiten 11 des Eckverbinders und den zugeordneten Flächen der Profile 1 und 2 gegeben.

Die Schenkel 8 und 9 des Eckverbinders 3 können somit zur Innenseite geöffnet sein, ohne daß in diesem Bereich Klebemasse von den Außenflächen des Eckverbinders 3 Flankenflächen des Eckverbinders 3 in den Innenraum der Schenkel 8 und 9 einfließen kann.

Die Schenkel 8 und 9 des Eckverbinders 3 sind U-förmig ausgebildet und an den freien Stirnseiten sowie an den Innenseiten geöffnet.

Der Eckverbinder 3 weist im Bereich der Ecklinie 12, die mit der Gehrungsfuge 7 fluchtet Nuten 13 auf, die von den Flankenflächen 14 ausgehen, wobei die Flankenflächen 14 Außenflächen des Eckverbinders 3 bilden, die parallel zur Längsmittelebene 15 des Eckverbinders verlaufen.

Die Nuten 13 stehen mit einem quer zur Längsmittelebene 15 verlaufenden Verteilungskanal 16 für eine einspritzbare Klebemasse in Verbindung, der sich über die Höhe des Eckverbinders 3 erstreckt und durch eine Abflachung 17 im Bereich der Spitze des Eckverbinders und durch die aufgeschobenen Profile 1 und 2 begrenzt wird. Benachbart der Gehrungsfuge 7 weist der Verteilungskanal 16 eine Einspritzöffnung 18 für die Klebemasse auf. In die Einspritzöffnung 18 kann eine angepaßte Spitze 19 einer Klebepresse schließend eingeführt werden.

Durch die Abflachung 17 des Eckverbinders wird in der Rahmenecke ein das Fließverhalten des Klebers begünstigender Verteilungskanal 16 geschaffen, durch den der eingespritzte Kleber in die beiden Nuten 13 eingeführt wird und von diesen Nuten aus auf die Flankenflächen 14 gelangt.

Die Flankenflächen 14 des Eckverbinders bilden mit den zugeordneten Innenflächen der Hohlprofile 1 und 2 Spalträume zur Aufnahme der Klebemasse, deren Höhe durch Abstandsstücke bestimmt ist.

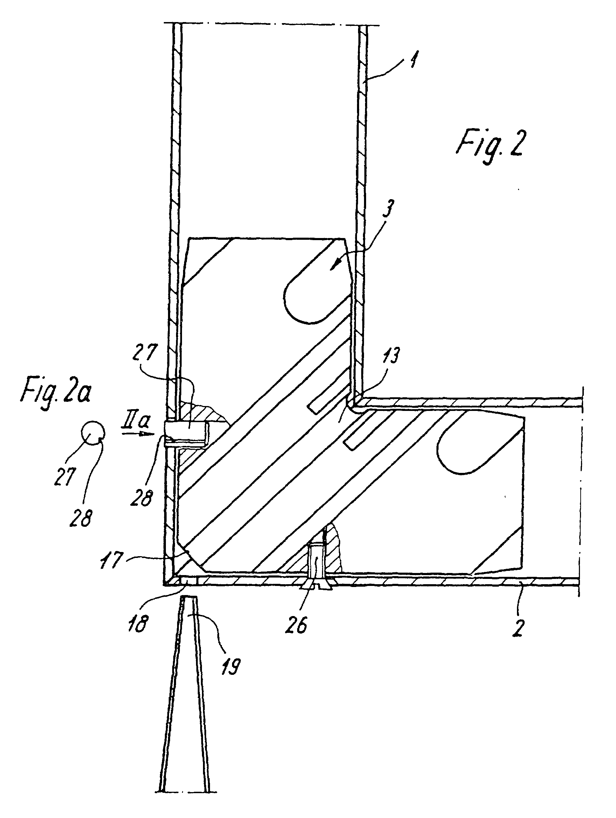

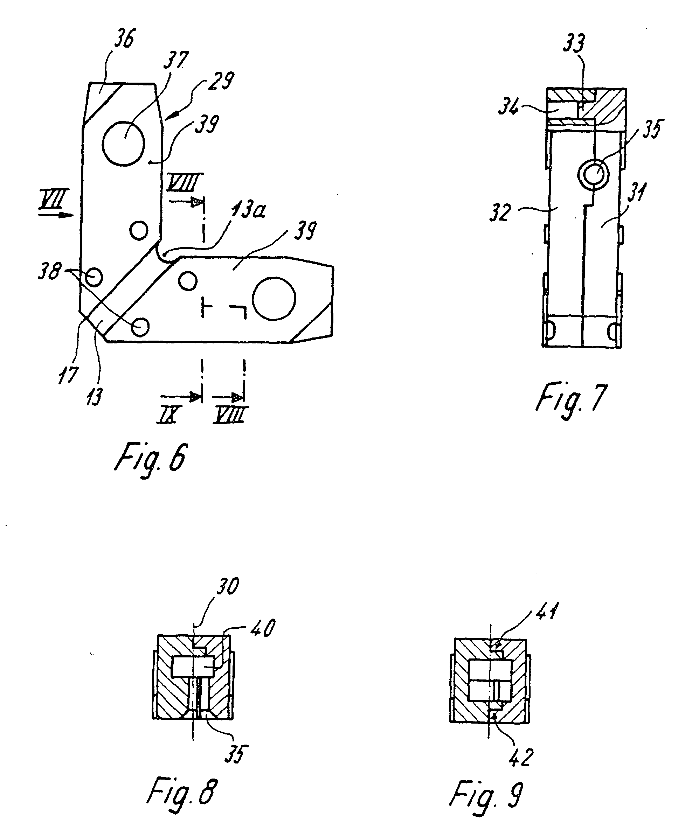

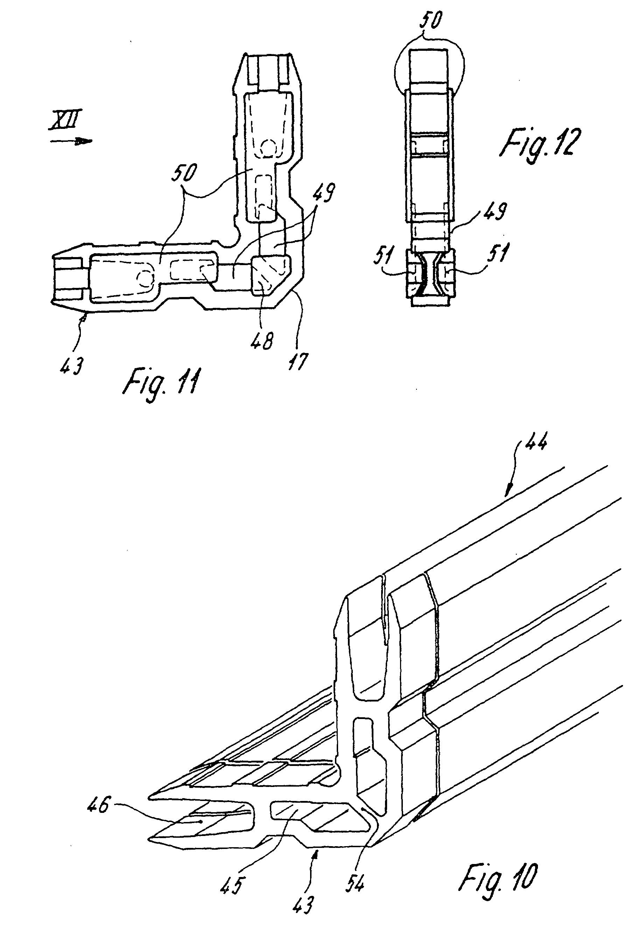

Diese Abstandsstücke 20,21,22 und 23 sind in dem Ausführungsbeispiel nach den Fig. 1 und 2 und auch bei dem Ausführungsbeispiel nach den Fig. 6 bis 9 mit dem Verbinder einstückig und können eine beliebige geometrische Form haben.

In dem dargestellten Ausführungsbeispiel sind die Abstandsstücke 20 und 21 rippenförmig ausgebildet und verlaufen parallel zur Ecklinie 12, während die Abstandsstücke 22 und 23 Vorsprünge von Teilflächen der Flankenflächen darstellen und dreieckförmige bzw. ellipsenförmige Konturen besitzen.

In Abwandlung der aufgezeigten Ausführungen können die Abstandsstücke auch auf die Flankenflächen des Eckverbinders aufgesetzt sein und aus dem gleichen oder einem anderen Material als der Eckverbinder bestehen. Die aufgesetzten Abstandsstücke können durch ein Klebemittel mit dem Eckverbinder verbunden sein.

Die Höhe der Abstandsstücke bzw. die Höhe der Spalträume zur Aufnahme von Klebemasse ist so gewählt, daß die Klebemasse in den Spalträumen ausreichend fließen kann und daß die Klebemasse die für die Eckverbindung optimale Schichtdicke bildet, um die gewünschte Scherfestigkeit zu erreichen.

Durch die Anordnung des Verteilungskanals 16 und der Nuten 13 im Bereich der Gehrungsfuge 7 wird im Bereich der Gehrungsfuge eine größere Schichtdicke des ausgehärteten Klebers erreicht, der mit zunehmender Schichtdicke elastischer wird und so für eine zusätzliche Abdichtung der Eckverbindung sorgt.

Durch das Ausstanzen der Laschen 4 aus dem Material der Hohlprofile 1 und 2 und durch das Einführen dieser Laschen 4 in die Ausnehmungen 5 des Eckverbinders wird eine geringe Öffnung zum Profilinnenraum vorgenommen.

Die Abstandsstücke sind auf den Flankenflächen so angeordnet, daß erst nach dem Einpressen einer bestimmten Menge an Kleber und nach einer entsprechenden Verteilung auf den Flankenflächen ein Rückstau im Bereich der Laschen 4 entsteht und ein wenig Klebemasse nach außen dringt. Hierdurch wird angezeigt, daß ein ausreichender Füllungsgrad an Kleber in der Eckverbindung vorhanden ist.

Aus der Fig. 5 ergibt sich, daß die Nut 13, die in der Ecklinie zwischen den Flankenflächen 14 zur Verteilung der Klebemasse vorgesehen ist, auch die Innenecke durchläuft und dort den Nutteil 13a bildet.

Im Bereich der Nut 13,13a und der Abflachung 17 ist der Eckverbinder massiv ausgebildet, während die sich daran anschließenden Schenkel 8 und 9 Innnenkammern 24,25 aufweisen, die zur freien Stirnseite der Schenkel und zur Innenseite der Rahmenecke geöffnet sind.

Durch diese Innenkammern 24 und 25 wird das Gewicht des Eckverbinders herabgesetzt. An den Flankenflächen und an der Außenseite der Rahmenecke ist der Eckverbinder geschlossen.

Aus der Fig. 2 ergibt sich, daß anstelle der in die Hohlprofile 1 und 2 eingestanzten Laschen 4 zur Verspannung der Hohlprofile 1 und 2 mit dem Eckverbinder 3 auch eine Senkkopfschraube 26 oder ein Nagel 27 verwendet werden kann. Der Nagel 27 ist mit einer Kerbe 28 ausgerüstet. Zur Erzielung der Verspannung zwischen den auf die Eckverbinder geschobenen Hohlprofilen und dem Eckverbinder bzw. zur Erzielung der kraftschlüssigen Verbindung in der Gehrungsfuge ist ein Versatz zwischen der Gewindebohrung im Eckverbinder und der Aufnahmebohrung für den Schraubenkopf im Hohlprofil bzw. ein Versatz zwischen der Aufnahmebohrung für den Nagel 27 und der zugeordneten Bohrung in dem Hohlprofil vorgesehen. Hierdurch ergibt sich bei der Schraubverbindung ein Spalt für das Austreten von Kleber, durch den der ausreichende Füllungsgrad signalisiert wird. Bei der Nagelverbindung kann Kleber durch die Kerbe 29 austreten.

In den Fig. 6 bis 9 ist ein Eckverbinder 29 aufgezeigt, der in der Längsmittelebene 30 oder in einer Parallelebene dazu durchgehend geteilt ist. Die Verbinderteile 31 und 32 werden durch Zapfen 33 des einen Verbinderteils,die in Bohrungen 34 des anderen Verbinderteils eingreifen, formschlüssig miteinander verbunden.

Die Teilungsebene zwischen den Verbinderteilen 31 und 32 erstreckt sich durch Bohrungen 35, von denen jeweils eine im Bereich eines Schenkels vorgesehen ist und von der Außenseite des Eckverbinders ausgeht.

In diese Bohrungen 35 werden Bolzen zum Spreizen der Eckverbinderteile und zum Transport der Hohlprofile in Richtung auf die Gehrungsfuge eingetrieben, so daß einerseits die Abstandsstücke 36,37,38, die an den Flankenflächen 39 vorgesehen sind, zur Anlage an den Innenflächen der aufgeschobenen Profile kommen und andererseits die Profile in der Gehrungsfuge aufeinandergepreßt werden.

Im Bereich der Ecklinie des Verbinders sind ebenfalls wie beim Eckverbinder nach den Fig. 1 und 2 von den Flankenflächen 39 ausgehende Nuten 13 vorgesehen, die an der Außenseite der Rahmenecke in einen Verteilungskanal für die Klebemasse einmünden, der von einer Abflachung 17 im Eckbereich des Eckverbinders begrenzt wird. In der Innenecke des Eckverbinders werden die Nuten 13 durch die Nut 13a fortgesetzt.

Der Eckverbinder weist im Bereich der Schenkel Innenkammern 40 auf, in die von außen keine Klebemasse eindringen kann, da diese Innenkammern durch Labyrinthdichtungen 41,42 abgedichtet sind, die durch einander überlappende Teil gestufter Flächen der Verbinderteile 31,32 gebildet werden.

In der Fig. 10 ist ein Eckverbinder 43 in perspektivischer Darstellung aufgezeigt, der aus einem Strangpreßprofil 44 geschnitten wird.

Dieser Eckverbinder weist Hohlkammern 45,46 auf, durch die das Gewicht des Eckverbinders herabgesetzt wird. Diese Hohlkammern sind zu den Flankenflächen bzw. zusätzlich zu den stirnseitigen freien Enden des Eckverbinders geöffnet, so daß der Eckverbinder in dieser Form nicht in der Rahmenecke verwendet werden kann, da nach dem mechanischen Festlegen der auf die Verbinderschenkel geschobenen Hohlprofile das Einbringen von Klebemasse in die Rahmenecke dazu führen würde, daß die Klebemasse in die Hohlkammern 45 und 46 abfließen würde.

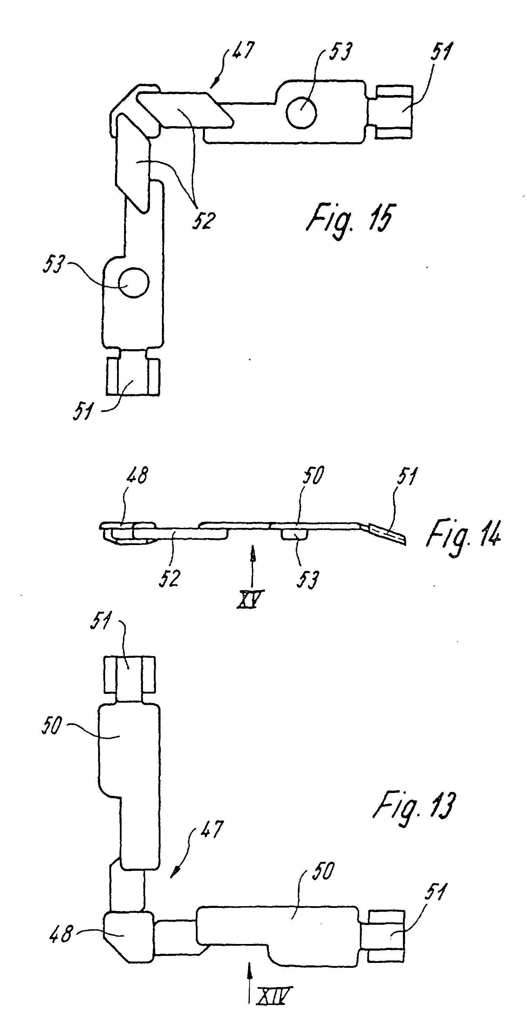

Um ein Abfließen der Klebemasse in die Hohlkammern zu unterbinden, wird bei dem Ausführungsbeispiel nach den Fig. 11 bis 15 auf die Flankenflächen jeweils ein winkelförmiger Abdeckkörper 47 gesetzt, der die Nuten und Rinnen für die Klebemasse begrenzt und Abstandsstücke aufweist, die die Höhe der Spalträume zur Aufnahme der Klebemasse festlegen. Der Eckverbinder 43 weist ebenfalls anstelle einer Spitze eine Abflachung 17 auf, die mit den auf die Verbinderschenkel aufgeschobenen Hohlprofilen den Verteilungskanal für die eingespritzte Klebemasse begrenzt.

Der Abdeckkörper 47 weist an der der Abflachung 17 zugewandten Seite ein dreieckförmiges Abstandsstück 48, das Strömungskanäle 49 zusammen mit weiteren Abstandsstücken 50 begrenzt.

An den freien Enden ist der Abdeckkörper 47 mit federnden Zungen 51 ausgerüstet, die vom Abdeckkörper schräg nach unten verlaufen und in die Hohlkammern 46 des Eckverbinders eingreifen.

An der Unterseite weist der Abdeckkörper Anformungen 52 und 53 auf, die in die Hohlkammern 45 und 46 eingreifen. Durch diese Anformungen 52,53 und Zungen 51 wird der Abdeckkörper 47 an dem Eckverbinder 43 fixiert.

Während bei dem dargestellten Ausführungsbeispiel jeder Flankenseite des Eckverbinders 43 ein Abdeckkörper 47 zugeordnet ist, besteht auch die Möglichkeit, die Abdeckung der Öffnungen der Hohlkammern zur Flankenseite hin mit mehreren Abdeckkörpern vorzunehmen.

Bei dem Eckverbinder 43 ist im Bereich der Ecklinie ein Steg 54 vorgesehen.

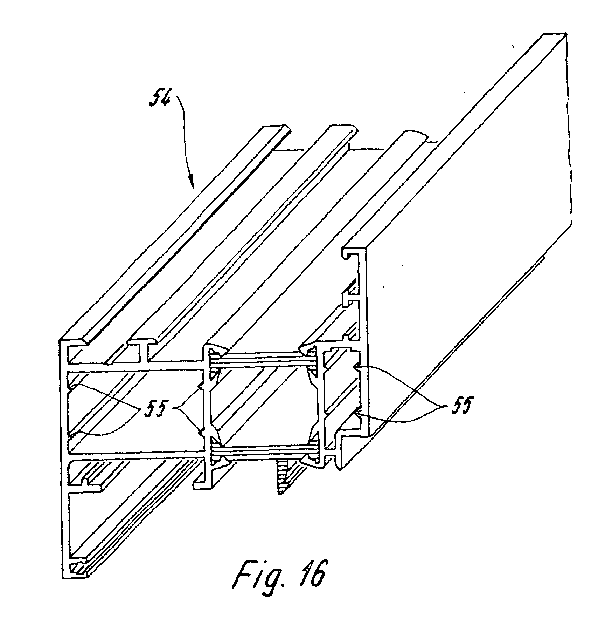

Während bei den bisher beschriebenen Ausführungsbeispielen die Abstandsstücke zur Bestimmung der Höhe der Spalträume zur aufnahme von Klebemasse einstückig mit dem Eckverbinder oder mit dem Verbinder durch einen Kleber o.dgl. verbunden waren, besteht auch die Möglichkeit, die in der Fig. 16 aufgezeigt ist, die Hohlprofile 54 mit Abstandsstücken 55 zu versehen, die mit einer Flankenfläche des Eckverbinders den jeweiligen Spaltraum zur Aufnahme von Klebemasse begrenzen.

### Bezugszeichen

- 1: Profil
- 2: Profil
- 3: Eckverbinder
- 4: Lasche
- 5: Ausnehmung
- 6: Schrägfläche
- 7: Gehrungsfuge
- 8: Schenkel
- 9: Schenkel
- 10: Innenkammer
- 11: Innenfläche
- 12: Ecklinie
- 13: Nut, 13a Nutteil
- 14: Flankenfläche
- 15: Längsmittelebene
- 16: Verteilungskanal
- 17: Abflachung
- 18: Einspritzöffnung
- 19: Spitze
- 20: Abstandsstück
- 21: Abstandsstück
- 22: Abstandsstück
- 23: Abstandsstück
- 24: Innenkammer
- 25: Innekammer
- 26: Senkkopfschraube
- 27: Nagel
- 28: Kerbe
- 29: Eckverbinder
- 30: Längsmittelebene
- 31: Verbinderteil
- 32: Verbinderteil
- 33: Zapfen
- 34: Bohrung
- 35: Bohrung
- 36: Abstandsstück
- 37: Abstandsstück
- 38: Abstandsstück
- 39: Flankenfläche
- 40: Innenkammer
- 41: Labyrinthdichtung
- 42: Labyrinthdichtung
- 43: Eckverbinder
- 44: Strangpreßprofil
- 45: Hohlkammer
- 46: Hohlkammer
- 47: Abdeckkörper
- 48: Abstandsstück
- 49: Strömungskanal
- 50: Abstandsstück
- 51: Zunge
- 52: Anformung
- 53: Anformung
- 54: Hohlprofil
- 55: Abstandsstück

## Patentansprüche

1. Eckverbinder und zugeordnete, auf Gehrung geschnittene Hohlprofile (1,2) eines Rahmens für Fenster, Türen oder Fassaden mit einem mit seinen Schenkeln in Innenkammern der Hohlprofile eingreifenden Eckverbinder (3,29,43), deren Höhe der lichten Höhe der Innenkammern entspricht, mit dem die Hohlprofile (1,2) unter kraftschlüssiger Abstützung in der Gehrungsfuge durch in Aufnahmen des Eckverbinders einformbare, eintreibbare oder einschraubbare Befestigungsmittel verspannbar sind und mit einem quer zur Längsmittelebene (15, 30) verlaufenden Verteilungskanal (16) für eine einspritzbare Klebemasse, der sich über die Höhe des Eckverbinders erstreckt, wobei eine Einspritzöffnung (18) für die Klebemasse in der Nähe der Gehrungsfuge (7) vorgesehen ist, **dadurch gekennzeichnet, daß** der sich über die Höhe des Eckverbinders erstreckende Verteilungskanal (16) im Bereich der äußeren Ecke des Eckverbinders (3, 29, 43) angeordnet, im Querschnitt dreieckförmig ausgebildet und durch den Eckverbinder (3, 29, 43) und durch die aufgeschobenen Hohlprofile begrenzt ist, und die Einspritzöffnung (18) für die Klebemasse in den Verteilungskanal (16) einmündet.

2. Eckverbinder und zugeordnete Hohlprofile nach Anspruch 1, **dadurch gekennzeichnet, daß** die äußere Ecke des Eckverbinders (3,29,43) eine Abflachung (17) aufweist.

3. Eckverbinder und zugeordnete Hohlprofile nach Anspruch 1 oder 2, **dadurch gekennzeichnet, daß** der Eckverbinder (43) aus einem Strangpreßprofil (44) geschnitten ist.

4. Eckverbinder und zugeordnete Hohlprofile nach Anspruch 3, **dadurch gekennzeichnet, daß** der Eckverbinder (43) im Bereich der Ecklinie mit einem Steg (54) ausgerüstet ist, der zwei symmetrisch dazu angeordnete Hohlkammern (45) voneinander trennt.

5. Eckverbinder und zugeordnete Hohlprofile nach Anspruch 3 oder 4, **dadurch gekennzeichnet, daß** der Eckverbinder (43) zu den freien Schenkelenden geöffnete Hohlkammern (46) aufweist.

6. Eckverbinder und zugeordnete Hohlprofile nach Anspruch 4 oder 5, **dadurch gekennzeichnet, daß** die Öffnungen des Eckverbinders (43) an den Flankenseiten abgedeckt sind und die Abdeckkörper (47) Nuten und Rinnen für die Führung der Klebemasse und Abstandsstücke (48,50) aufweisen.

7. Eckverbinder und zugeordnete Hohlprofile nach Anspruch 6, **dadurch gekennzeichnet, daß** der Abdeckkörper (47) an der Unterseite mit Anformungen (52,53) versehen ist und an den freien Enden Zungen (51) aufweist, die in die Hohlkammern (45,46) eingreifen.

8. Eckverbinder und zugeordnete Hohlprofile nach Anspruch 1, **dadurch gekennzeichnet, daß** zwischen den parallel zu der Längsmittelebene (15,13) verlaufenden Flankenflächen (14,39) und den inneren Begrenzungsflächen der Hohlprofile durch Abstandsstücke (20,21,22,23;36,37,38;48,50;55) bestimmte Spalträume zur Aufnahme von durch den Verteilungskanal (16) zugeführter Klebemasse vorgesehen sind.

9. Eckverbinder und zugeordnete Hohlprofile nach einem der vorhergehenden Ansprüche, **dadurch gekennzeichnet, daß** die Einspritzöffnung (18) der Klebemasse in der Nähe der Gehrungsfuge (7) vorgesehen ist und in den Verteilungskanal (16) einmündet.

## Claims

1. Corner connector and associated mitred hollow profiles (1, 2) for a frame for windows, doors or facades, having a corner connector (3, 29, 43) which has its legs engaging in inner chambers of the hollow profiles and of which the height corresponds to the vertical clearance of the inner chambers, by means of which the hollow profiles (1, 2) can be braced with force-fitting support in the mitre joint by fastening means which can be screwed or driven into mounts of the corner connector, or formed therein, and having a distributing channel (16) which runs transversely to the longitudinal centre plane (15, 30), is intended for an injectable adhesive compound and extends over the height of the corner connector, an injection opening (18) for the adhesive compound being provided in the vicinity of the mitre joint (7), **characterized in that** the distributing channel (16), which extends over the height of the corner connector, is 'arranged in the region of the outer corner of the corner connector (3, 29, 43), is of triangular design in cross section and is bounded by the corner connector (3, 29, 43) and by the pushed-on hollow profiles, and the injection opening (18) for the adhesive compound opens out into the distributing channel (16).

2. Corner connector and associated hollow profiles according to Claim 1, **characterized in that** the outer corner of the corner connector (3, 29, 43) has a flattened portion (17).

3. Corner connector and associated hollow profiles according to Claim 1 or 2, **characterized in that** the corner connector (43) is cut from an extruded profile (44).

4. Corner connector and associated hollow profiles according to Claim 3, **characterized in that** the corner connector (43) is provided, in the region of the corner line, with a crosspiece (54), by means of which two hollow chambers (45) which are arranged symmetrically in relation to the same are separated from one another.

5. Corner connector and associated hollow profiles according to Claim 3 or 4, **characterized in that** the corner connector (43) has hollow chambers (46) which are open in the direction of the free leg ends.

6. Corner connector and associated hollow profiles according to Claim 4 or 5, **characterized in that** the openings of the corner connector (43) are covered on the flank sides, and the covering bodies (47) have grooves and channels, for channelling the adhesive compound, and spacer elements (48, 50).

7. Corner connector and associated hollow profiles according to Claim 6, **characterized in that** the covering body (47) is provided with integrally formed portions (52, 53) on the underside and has tongues (51) at the free ends, said tongues engaging in the hollow chambers (45, 46).

8. Corner connector and associated hollow profiles according to Claim 1, **characterized in that** spaces which are determined by spacer elements (20, 21, 22, 23; 36, 37, 38; 48, 50, 55) and are intended for accommodating adhesive compound fed through the distributing channel (16) are provided between the flank surfaces (14, 39), running parallel to the longitudinal centre plane (15, 13), and the inner boundary surfaces of the hollow profiles.

9. Corner connector and associated hollow profiles according to one of the preceding claims, **characterized in that** the injection opening (18) for the adhesive compound is provided in the vicinity of the mitre joint (7) and opens out into the distributing channel (16).

## Revendications

1. Raccord d'angle et profilés creux (1, 2) correspondants, coupés en onglet, d'un cadre pour fenêtres, portes ou façades avec un raccord d'angle (3, 29, 43), s'engageant par ses branches dans des chambres intérieures des profilés creux et dont la hauteur correspond à la hauteur libre des chambres intérieures, au moyen duquel les profilés creux (1, 2) peuvent être serrés, par appui en force dans le joint en onglet, par des moyens de fixation qui peuvent être formés, enfoncés ou vissés dans des logements du raccord d'angle, et avec un canal de distribution (16) pour une pâte adhésive à injecter, qui s'étend transversalement au plan médian longitudinal (15, 30) et sur la hauteur du raccord d'angle, une ouverture d'injection (18) pour la pâte adhésive étant prévue à proximité du joint en onglet (7), **caractérisé en ce que** le canal de distribution (16) s'étendant sur la hauteur du raccord d'angle est disposé dans la zone de l'angle extérieur du raccord d'angle (3, 29, 43), **en ce que** sa section transversale est triangulaire et **en ce qu'**il est délimité par le raccord d'angle (3, 29, 43) et par les profilés creux enfilés, et l'ouverture d'injection (18) pour la pâte adhésive débouche dans le canal de distribution (16).

2. Raccord d'angle et profilés creux correspondants selon la revendication 1, **caractérisés en ce que** l'angle extérieur du raccord d'angle (3, 29, 43) présente une partie aplatie (17).

3. Raccord d'angle et profilés creux correspondants selon la revendication 1 ou 2, **caractérisés en ce que** le raccord d'angle (43) est coupé dans un profilé extrudé (44).

4. Raccord d'angle et profilés creux correspondants selon la revendication 3, **caractérisés en ce que** dans la zone de la ligne d'angle, le raccord d'angle (43) est équipé d'une cloison (54) qui sépare l'une de l'autre deux chambres creuses (45) disposées symétriquement par rapport à celle-ci.

5. Raccord d'angle et profilés creux correspondants selon la revendication 3 ou 4, **caractérisés en ce que** le raccord d'angle (43) présente des chambres creuses (46) ouvertes vers les extrémités libres des branches.

6. Raccord d'angle et profilés creux correspondants selon la revendication 4 ou 5, **caractérisés en ce que** les ouvertures du raccord d'angle (43) sont recouvertes sur les côtés des flancs et les corps de recouvrement (47) présentent des rainures et des rigoles pour le guidage de la pâte adhésive ainsi que des écarteurs (48, 50).

7. Raccord d'angle et profilés creux correspondants selon la revendication 6, **caractérisés en ce que** le corps de recouvrement (47) est pourvu sur sa face inférieure de parties venues de moulage (52, 53) et présente aux extrémités libres des languettes (51) qui s'engagent dans les chambres creuses (45, 46).

8. Raccord d'angle et profilés creux correspondants selon la revendication 1, **caractérisés en ce qu'**entre des surfaces de flancs (14, 39), s'étendant parallèlement au plan médian longitudinal (15, 13), et les surfaces de délimitation intérieures des profilés creux, sont prévues des fentes, déterminées par des écarteurs (20, 21, 22, 23 ; 36, 37, 38 ; 48, 50 ; 55), destinées à recevoir la pâte adhésive amenée par le canal de distribution (16).

9. Raccord d'angle et profilés creux correspondants selon l'une des revendications précédentes, **caractérisés en ce que** l'ouverture d'injection (18) de la pâte adhésive est prévue à proximité du joint en onglet (7) et débouche dans le canal de distribution (16).
